# EUROPEAN PATENT APPLICATION

(11) **EP 4 473 821 A1**
(43) Date of publication of application: **11.12.2024**
(21) Application number: 24174881.3
(22) Date of filing: 08.05.2024
(51) Int. Cl.: A01D 34/00

(54) **IMPROVED NAVIGATION FOR A ROBOTIC LAWNMOWER SYSTEM**

(30) Priority: 08.06.2023 SE 2350694
(71) Applicant: Husqvarna AB, 561 82 Huskvarna (SE)
(72) Inventor: Jansson, Viktor, Huskvarna (SE)

(57) **Abstract**

A method for use in a robotic lawnmower system (200) comprising a robotic lawnmower (100) arranged to operate in an operational area (205) according to an intended pattern having, the robotic lawnmower (100) comprising a grass cutter (160) having a centrum (CX) that deviates from a rotational centrum (RX) of the robotic lawnmower (100), and a controller (110) , wherein the method comprises
causing the robotic lawnmower (100) to navigate according to the intended pattern maintaining the grass cutter (160) overlapping the intended pattern, and to navigate a turn in the intended pattern by:
moving forwards to a corner in the turn,
moving rearwards and then again moving forwards, all while maintaining the grass cutter (160) overlapping the intended pattern.

## Description

### TECHNICAL FIELD

This application relates to a robotic lawnmower and in particular to a system and a method for providing an improved navigation for robotic lawnmowers in such a system.

### BACKGROUND

Automated or robotic lawnmowers are becoming increasingly more popular and so is the use of the robotic lawnmower in various types of operational areas. Furthermore, there is also a trend for satellite navigation and virtual borders for such robotic lawnmowers and specifically for performing (sophisticated) patterns in the grass. However, sometimes the robotic lawnmowers are not able to properly navigate the pattern, especially in tight corners.

Thus, there is a need for an improved manner of providing an improved manner of navigating intended patterns, especially in corners and particularly tight corners.

### SUMMARY

The inventors are proposing to achieve this by maneuvering the robotic lawnmower in an untraditional manner where the focus is on the location of the grass cutter in the robotic lawnmower - and not the position of the robotic lawnmower and where the robotic lawnmower is configured to operate in a forwards-rearwards-forwards manner for negotiating a turn.

It is therefore an object of the teachings of this application to overcome or at least reduce those problems by providing a robotic lawnmower system comprising a robotic lawnmower system comprising a robotic lawnmower arranged to operate in an operational area according to an intended pattern, the robotic lawnmower comprising a grass cutter having a centrum that deviates from a rotational centrum of the robotic lawnmower, and a controller, wherein the controller is configured to cause the robotic lawnmower to navigate according to the intended pattern maintaining the grass cutter overlapping the intended pattern, and to navigate a turn in the intended pattern by: moving forwards to a corner in the turn, moving rearwards and then again moving forwards, all while maintaining the grass cutter overlapping the intended pattern.

This has the benefit that the robotic lawnmower is enabled to navigate also the tightest corners in the intended pattern.

In some embodiments the controller is further configured to prioritize maintaining the centrum of the grass cutter over the intended pattern.

In some embodiments the controller is further configured to maintain the grass cutter inside the turn.

In some embodiments the corner has an angle above 60 degrees.

In some embodiments the controller is further configured to cause the robotic lawnmower to navigate the turn having the corner in the intended pattern by: moving forwards until the grass cutter is over the corner, and then reversing and turning so that the robotic lawnmower is enabled to turn while keeping the grass cutter over the intended pattern, and determine that the grass cutter centrum (CX) is in front of the rotational centrum (RX) as regards the direction of the intended pattern, and then moving forwards again bringing the robotic lawnmower in line with the intended pattern all while maintaining the grass cutter over the intended pattern.

In some embodiments the controller is further configured to maintain the grass cutter over the intended pattern by maintaining the grass cutter centrum (CX) over the intended pattern.

In some embodiments the controller is further configured to cause the robotic lawnmower to navigate a turn having a first corner in the intended pattern by: causing the robotic lawnmower to move forwards and to deviate from the first corner to a second position after the first corner where again the grass cutter overlaps the intended pattern, and thereafter causing the robotic lawnmower to move in reverse to a third position over the first corner where again the grass cutter overlaps the intended pattern on the first corner and then again moving forwards.

In some embodiments the controller is further configured to cause the robotic lawnmower to navigate a turn having a second corner in the intended pattern whereby the second position overlaps the second corner and whereby the controller is further configured to cause the robotic lawnmower to again move forwards from the first corner and to deviate from the second corner to a fourth position after the first corner where again the grass cutter overlaps the intended pattern.

It is also an object of the teachings of this application to overcome the problems by providing a method for use in a method for use in a robotic lawnmower system comprising a robotic lawnmower arranged to operate in an operational area according to an intended pattern, the robotic lawnmower comprising a grass cutter having a centrum that deviates from a rotational centrum of the robotic lawnmower, and a controller , wherein the method comprises causing the robotic lawnmower to navigate according to the intended pattern maintaining the grass cutter overlapping the intended pattern, and to navigate a turn in the intended pattern by: moving forwards to a corner in the turn, moving rearwards and then again moving forwards, all while maintaining the grass cutter overlapping the intended pattern.

Further embodiments and aspects are as in the attached patent claims and as discussed in the detailed description.

Other features and advantages of the disclosed embodiments will appear from the following detailed disclosure, from the attached dependent claims as well as from the drawings. Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention will be described in further detail under reference to the accompanying drawings in which:
Figure 1 shows a schematic view of the components of an example of a robotic lawnmower according to some example embodiments of the teachings herein;
Figure 2 shows a schematic view of a robotic lawnmower system according to some example embodiments of the teachings herein;
Figure 3 shows a schematic view of an intended pattern being serviced in a traditional manner;
Figures 4A, 4B and 4C show a schematic view of an intended pattern being serviced according to some example embodiments of the teachings herein;
Figures 5A - 5K show a schematic view of two examples of an intended pattern being serviced according to some example embodiments of the teachings herein; and
Figure 6 shows a corresponding flowchart for a method according to some example embodiments of the teachings herein.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein. Like reference numbers refer to like elements throughout.

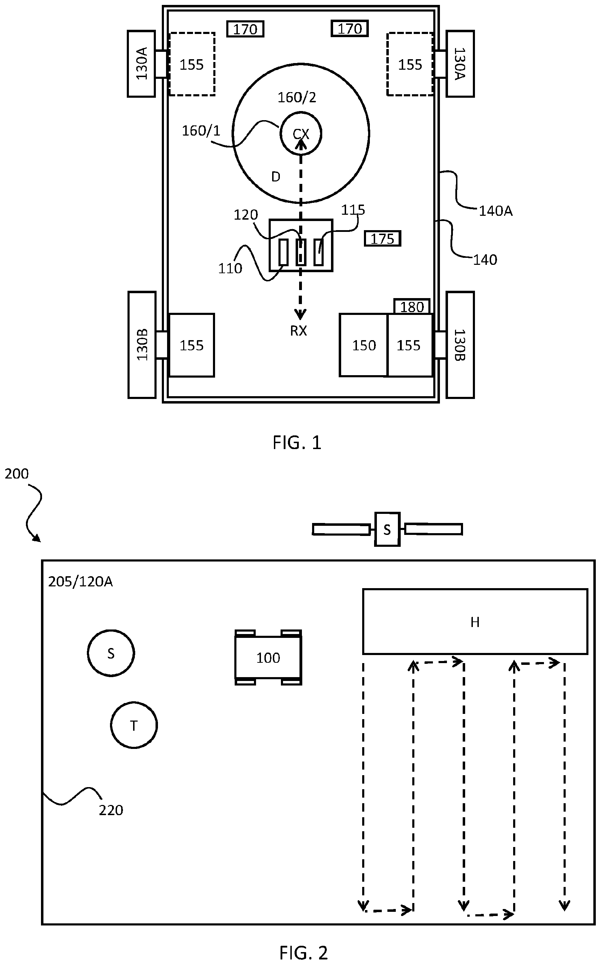

Figure 1 shows a schematic overview of a robotic lawnmower 100. The robotic lawnmower 100 may be a multi-chassis type or a mono-chassis type (as in figure 1). A multi-chassis type comprises more than one main body parts that are movable with respect to one another. A mono-chassis type comprises only one main body part.

It should be noted that robotic lawnmower may be of different sizes, where the size ranges from merely a few decimetres for small garden robots, to even more than 1 meter for large robots arranged to service for example airfields.

It should also be noted that the robotic lawnmower is a self-propelled robotic lawnmower, capable of autonomous navigation within a work area, where the robotic lawnmower propels itself across or around the work area in a pattern (random or predetermined).

The robotic lawnmower 100 has a main body part 140, possibly comprising a chassis 140 and an outer shell 140A, and a plurality of wheels 130 (in this example four wheels 130, but other number of wheels are also possible, such as three or six).

The main body part 140 substantially houses all components of the robotic lawnmower 100. At least some of the wheels 130 are drivably connected to at least one electric motor 155 powered by a battery 150. It should be noted that even if the description herein is focused on electric motors, combustion engines may alternatively be used, possibly in combination with an electric motor. In the example of figure 1, each of the wheels 130 is connected to a common or to a respective electric motor 155 for driving the wheels 130 to navigate the robotic lawnmower 100 in different manners. The wheels, the motor 155 and possibly the battery 150 are thus examples of components making up a propulsion device. By controlling the motors 155, the propulsion device may be controlled to propel the robotic lawnmower 100 in a desired manner, and the propulsion device will therefore be seen as synonymous with the motor(s) 150.

It should be noted that wheels 130 driven by electric motors is only one example of a propulsion system and other variants are possible such as caterpillar tracks.

The robotic lawnmower 100 also comprises a controller 110 and a computer readable storage medium or memory 120. The controller 110 may be implemented using instructions that enable hardware functionality, for example, by using executable computer program instructions in a general-purpose or special-purpose processor that may be stored on the memory 120 to be executed by such a processor. The controller 110 is configured to read instructions from the memory 120 and execute these instructions to control the operation of the robotic lawnmower 100 including, but not being limited to, the propulsion and navigation of the robotic lawnmower.

The controller 110 in combination with the electric motor 155 and the wheels 130 forms the base of a navigation system (possibly comprising further components) for the robotic lawnmower, enabling it to be self-propelled as discussed.

The controller 110 may be implemented using any suitable, available processor or Programmable Logic Circuit (PLC). The memory 120 may be implemented using any commonly known technology for computer-readable memories such as ROM, FLASH, DDR, or some other memory technology.

The robotic lawnmower 100 is further arranged with a wireless communication interface 115 for communicating with other devices, such as a server, a personal computer, a smartphone, the charging station, and/or other robotic lawnmowers. Examples of such wireless communication devices are Bluetooth^{®}, WiFi^{®} (IEEE802.11b), Global System Mobile (GSM) and LTE (Long Term Evolution), to name a few.

The robotic lawnmower 100 also comprises a grass cutter 160, such as a rotating blade 160/2 driven by a cutter motor 160/1.

The robotic lawnmower 100 further comprises at least one satellite signal navigation sensor 175 configured to provide navigational information (such as position) based on receiving one or more signals from a satellite - possibly in combination with receiving a signal from a beacon. In some embodiments the satellite navigation sensor is a GPS (Global Positioning System) device or other Global Navigation Satellite System (GNSS) device. In some embodiments the satellite navigation sensor is a RTK sensor.

The robotic lawnmower 100 may also or alternatively comprise deduced reckoning sensors 180. The deduced reckoning sensors may be odometers, accelerometer or other deduced reckoning sensors. In some embodiments, the deduced reckoning sensors are comprised in the propulsion device, wherein a deduced reckoning navigation may be provided by knowing the current supplied to a motor and the time the current is supplied, which will give an indication of the speed and thereby distance for the corresponding wheel.

For enabling the robotic lawnmower 100 to navigate with reference to a boundary wire (referenced 220 in figure 2) emitting a magnetic field caused by a control signal transmitted through the wire, the robotic lawnmower 100 is configured to have at least one magnetic field sensor 170 arranged to detect the magnetic field and for detecting the wire and/or for receiving (and possibly also sending) information to/from a signal generator. In some embodiments, the sensors 170 may be connected to the controller 110, possibly via filters and an amplifier, and the controller 110 may be configured to process and evaluate any signals received from the sensors 170. The sensor signals are caused by the magnetic field being generated by the control signal being transmitted through the wire. This enables the controller 110 to determine whether the robotic lawnmower 100 is close to or crossing the boundary wire, or inside or outside an area enclosed by the boundary wire. In some embodiments the robotic lawnmower 100 is arranged with more than one magnetic sensor 170 which enables for an improved following of a wire where for example the orientation with regards to the wire can be taken into consideration. Using more than one magnetic sensor 170, for example 2 sensors, enables the robotic lawnmower 100 to follow a wire by straddling the wire with one sensor on either side of the wire.

The robotic lawnmower 100 is in some embodiments arranged to operate according to a map application representing one or more work areas (and possibly the surroundings of the work area(s)) stored in the memory 120 of the robotic lawnmower 100. The map application may be generated or supplemented as the robotic lawnmower 100 operates or otherwise moves around in the work area 205. In some embodiments, the map application includes one or more start regions and one or more goal regions for each work area. In some embodiments, the map application also includes one or more transport areas. The robotic lawnmower 100 is in some embodiments arranged to navigate according to the map based on the satellite navigation sensor 175.

Returning to the propulsion system and in particular the wheels 130B of the robotic lawnmower of figure 1, in this example there are four wheels, two rear wheels driven by one or more electric motors, and two front wheels 130A. The front wheels 130A are in some embodiments caster wheels and not driven by the electric motor(s) 155, and in some embodiments the front wheels are driven by the electric motor(s) 155. The driving of the front wheels is thus optional. Furthermore, and as is illustrated in figure 1, the front wheels 130A are in some embodiments of a different diameter than the rear wheels 130B. Due to these differences in propulsion and/or wheel size, the rotational centrum RX of the robotic lawnmower 100 is in most embodiments not the same as the centrum, CX, of the cutter 160.

In the following the description will be for a robotic lawnmower 100 having free casting front wheels of a smaller diameter than the rear wheels, whereby the rotational centrum will be between the rear wheels 130B as indicated in figure 1. The rotational centrum RX is thus at a distance D from the cutter centrum CX. As the inventors have realized, the cutter centrum CX will thus move relative the rotational centrum RX of the robotic lawnmower 100 at a turning radium D. It should be noted that for other designs determining the rotational centrum would be within the knowledge of the skilled person as well as determining the turning radii with regards to the cutter centrum CX of various such designs.

As mentioned above, the inventors have realized that due to the difference in centrums for the robotic lawnmower 100 (RX) and for the cutter (CX), the robotic lawnmower 100 should be maneuvered in an untraditional and inventive manner to enable for a servicing that is closer to the pattern wanted as will be discussed in further details below.

Figure 2 shows a robotic lawnmower system 200 in some embodiments. The schematic view is not to scale. The robotic lawnmower system 200 comprises one or more robotic lawnmowers 100 according to the teachings herein. It should be noted that the operational area 205 shown in figure 2 is simplified for illustrative purposes. The schematic view of figure 2 also illustrates a graphic representation of a map application 120A stored in the memory of the robotic lawnmower 100 as discussed in the above.

The robotic lawnmower system comprises, in some embodiments, a boundary wire 220 through which a control signal is transmitted thereby generating a magnetic field, and which magnetic field is sensed by sensor(s) (170) in the robotic lawnmower 100. In some embodiments the control signal is generated by a signal generator comprised in a station.

In some embodiments as in addition to or as an alternative to the boundary generated by the boundary wire 220, the robotic lawnmower 100 is also or alternatively arranged to operate according to a virtual boundary also referenced 220 specified in the map application 120A based on the satellite navigation sensor(s) 175, and/or the deduced reckoning sensors 180.

As with figure 1, the robotic lawnmower(s) is exemplified by a robotic lawnmower, whereby the robotic lawnmower system may be a robotic lawnmower system or a system comprising a combination of robotic lawnmowers, one being a robotic lawnmower, but the teachings herein may also be applied to other robotic lawnmowers adapted to operate within a work area.

In some embodiments the robotic lawnmower is arranged or configured to traverse and operate in work areas that are not essentially flat, but contain terrain that is of varying altitude, such as undulating, comprising hills or slopes or such. The ground of such terrain is not flat and it is not straightforward how to determine an angle between a sensor mounted on the robotic lawnmower and the ground. The robotic lawnmower is also or alternatively arranged or configured to traverse and operate in a work area that contains obstacles that are not easily discerned from the ground. Examples of such are grass or moss-covered rocks, roots or other obstacles that are close to ground and of a similar colour or texture as the ground. The robotic lawnmower is also or alternatively arranged or configured to traverse and operate in a work area that contains obstacles that are overhanging, i.e. obstacles that may not be detectable from the ground up, such as low hanging branches of trees or bushes. Such a garden is thus not simply a flat lawn to be mowed or similar, but a work area of unpredictable structure and characteristics. The work area 205 exemplified with referenced to figure 2, may thus be such a non-uniform work area as disclosed in this paragraph that the robotic lawnmower is arranged to traverse and/or operate in.

As is shown in figure 2 there may be obstacles such as houses (referenced H), structures, trees (referenced T), stones (referenced S) to mention a few examples that block signal reception in certain areas, hereafter referred to as shadowed areas. In figure 2 such obstacles are indicated and referenced H (as in house).

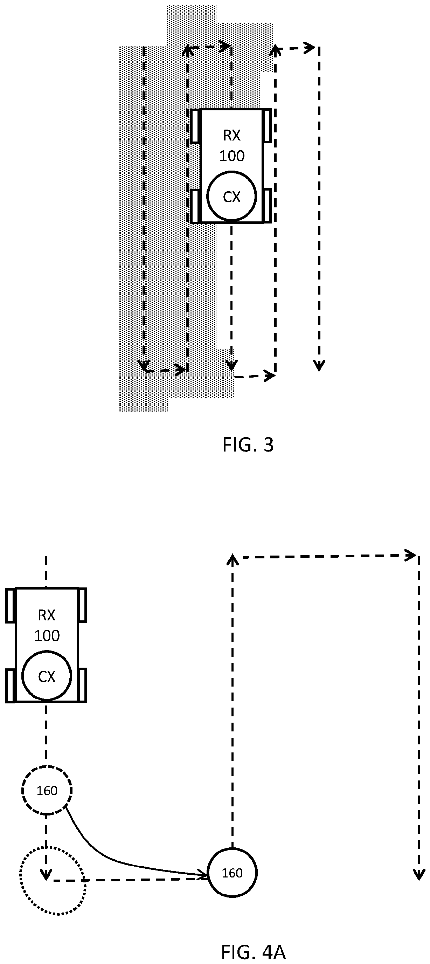

Many robotic lawnmowers 100 are arranged to operate in an operating pattern (indicated in figure 2 by the dotted lines). This pattern may be of any type, but usually consists of parallel lines, the main purpose of the pattern being to ensure even servicing of the operational area. Such patterns are commonly known in the art. Commonly robotic lawnmowers 100 are arranged to follow the pattern based on a location determined by the satellite and/or deduced reckoning sensors. Such navigation is thus based on a location of the robotic lawnmower 100 which in almost all cases is the centrum of the robotic lawnmower 100. However, due to the - as the inventors have realized - displacement of the rotational centrum and the cutter centrum, and also the displacement of these centra to the physical centrum or centrum for which the location of the robotic lawnmower 100 is determined, the cutter will not follow the pattern and will overshoot or alternatively undershoot the pattern in turns. Figure 3 is a schematic view of a prior art cutting pattern being operated on in a prior art manner. As is indicated the robotic lawnmower 100 follows the pattern but as it turns, the cutter centrum has already overshot the turn and the resulting cutting pattern will not be as the intended pattern. As a skilled person would understand the illustration in figure 3 is only schematic and for illustrating the principle and there may be other ways in which the cut (or otherwise serviced) pattern differs from the intended pattern.

In order to ensure that the robotic lawnmower actually performs the intended pattern also in turns, especially sharp turns, the inventors have devised a simple and ingenious manner of manoeuvring the robotic lawnmower 100 wherein the robotic lawnmower 100 is controlled to manoeuvre so that the cutter 160 and primarily the cutting centrum CX follows the intended pattern and not necessarily the robotic lawnmower 100.

In the below, several embodiments of how the robotic lawnmower may be adapted will be disclosed. It should be noted that all embodiments may be combined in any combination providing a combined adaptation of the robotic lawnmower.

Figures 4A to 4C show a similar view of an intended pattern as in figure 3, where the pattern has been enlarged in order to more clearly illustrate the teachings herein. Furthermore, in order to not clutter the view of figure 4A, only the cutter 160 is shown for all steps, and not the whole robotic lawnmower 100.

As the robotic lawnmower 100 approaches a turn, the controller determines a turning pattern wherein the cutter 160, and primarily the cutter centrum, is over the intended pattern. And, furthermore, the center of the cutter is in some embodiments prioritized to stay inside the pattern.

However, the pattern according to the ingenious teachings herein allows or even relies upon that the cutter is allowed to steer away from the pattern (and in some embodiments only on an inside of the pattern - i.e. inside the turn). This is illustrated in figure 4A, where the robotic lawnmower 100 is maneuvered forwards through the corner so that the cutter 160 is moved from a first position (at the beginning of the turn - dashed lines) to a second position along a path that deviates from the intended pattern especially in the corner, where even the cutter will be allowed to not overlap the pattern. There will thus be an unserviced area in the (first) corner as indicated by the dotted oval.

For patterns having corners that are located close to one another, wherein close is within 1 or two robotic lawnmower lengths, the second position is overlapping the next corner as in figure 4A.

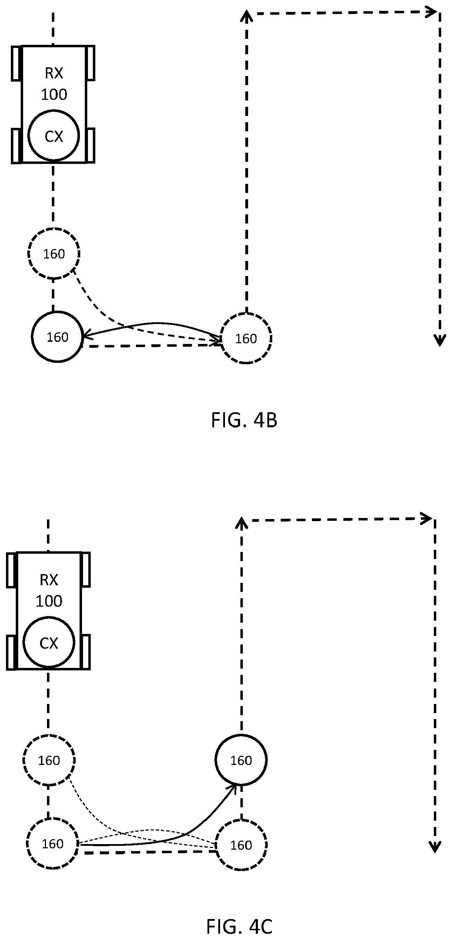

However, in order to service the first corner, the robotic lawnmower is then configured to maneuver in reverse, so that the first corner is covered by the cutter 160, as is illustrated in figure 4B, where the cutter 160 is moved from the second position to a third position by the robotic lawnmower 100 reversing, the third position overlapping the (first) corner.

If this is the only corner in close vicinity (close vicinity defined based on the size of the robotic lawnmower and/or the cutter, for example 1 or 2 lengths of the robotic lawnmower 100), the robotic lawnmower 100 may then continue forwards further servicing the intended pattern.

Figure 4C shows the situation when there is a second corner in close vicinity whereby the second position that the robotic lawnmower 100 maneuvers to overlaps the second corner as shown in figure 4A. Furthermore, the robotic lawnmower 100 is here maneuvered forwards while allowing the cutter to deviate from the intended pattern as regards the second corner to a fourth position over the intended pattern after the second corner. In this instance, there is no missed portion as the robotic lawnmower 100 has already serviced this corner.

To summarize for a one-corner turn, the robotic lawnmower 100 is configured to maneuver forwards while maintaining the cutter 160 is over the intended pattern except for in the corner (the cutter thus deviates from the corner) to a second position where the cutter is again over the intended pattern. And, the robotic lawnmower 100 then reverses so that the cutter 160 overlaps the first corner, whereby the cutter 160 is again over the intended pattern and the first corner at a third position.

Two summarize for a two-corner turn (i.e. a turn having two corners within one or two robotic lawnmower lengths), the robotic lawnmower navigates with respect to the first corner as for a one-corner turn with the added specification that the robotic lawnmower 100 continues to the second corner, be fore reversing. As the first corner has been reached, the robotic lawnmower 100 continues forwards deviating from the second corner to a third position over the intended pattern.

The inventors have further realized that the turning pattern of forwards, reverse and again forwards can be expanded to a more detailed following of an intended pattern through a turn no matter how the corners look lie, wherein the robotic lawnmower 100 is configured to follow the intended pattern keeping the grass cutter 160 overlapping the intended pattern and to allow for sharp turns, which would not be possible using a forwards propulsion the robotic lawnmower is configured to negotiate such tight corners (90 degrees or more) by moving forwards keeping the grass cutter 160 over the intended pattern into the corner and then to reverse and turn to keep the grass cutter 160 over the intended pattern while being over the intended pattern.

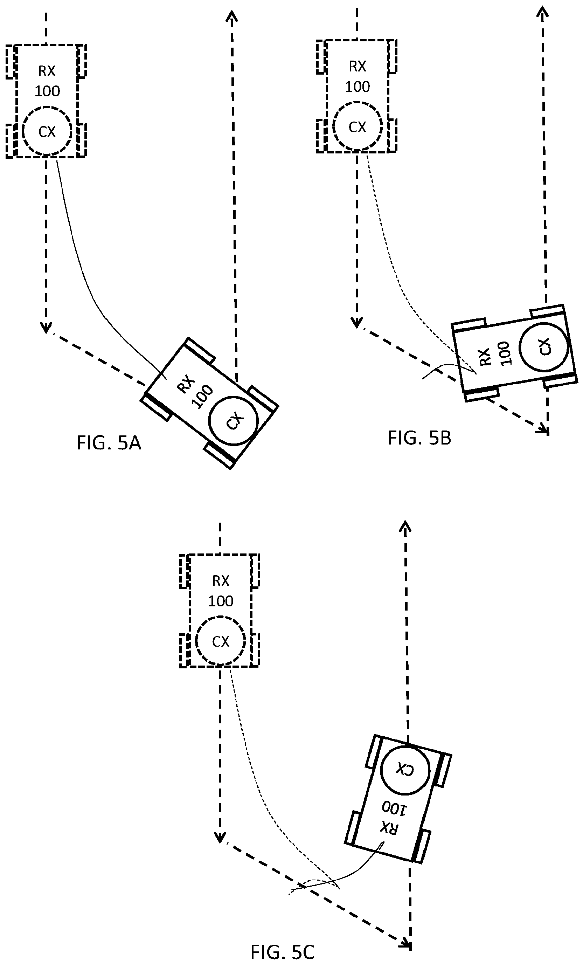

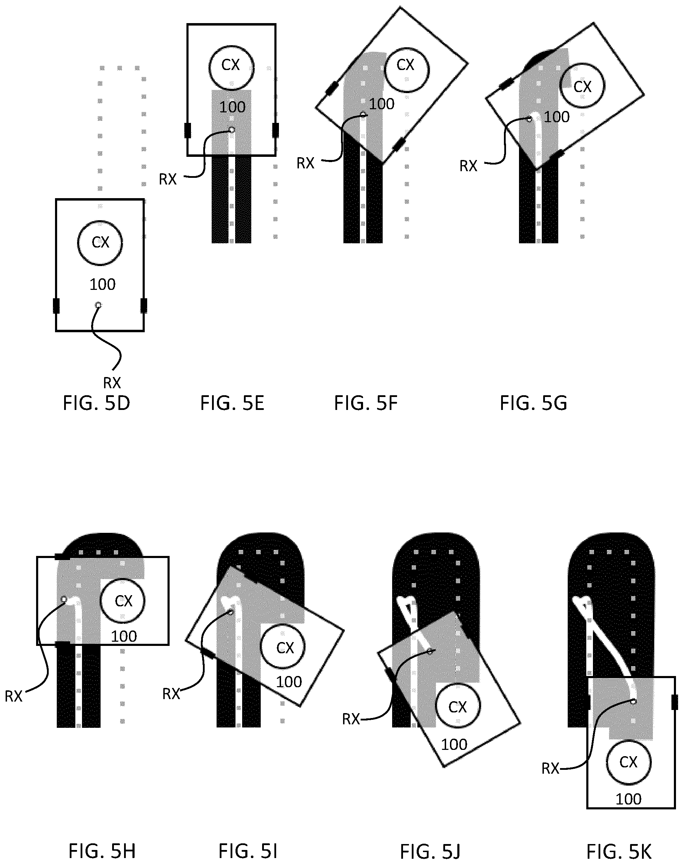

Figures 5A, 5B and 5C show how such maneuvering is performed on a turn having a tight (over 60, 75 or 90 degrees) corner. In this example the turn angle is close to 120 degrees.

The same general pattern forwards, reverse and again forwards is repeated here for a more general corner, wherein the grass cutter 160 is maintained over the intended pattern the steering taking into account the deviation D between the rotational centrum RX and the grass cutter centrum CX and adapting accordingly.

The new maneuvering focusing on the cutter and the forwards/backwards motion taught herein thereby provides a solution to this and other problems of the prior art.

Figures 5D to 5K show an alternative example of how such maneuvering is performed on a turn having a tight (over 60, 75 or 90 degrees) corner, in this example 90 degrees. The intended pattern is indicated by the dotted line. As before the rotational centrum RX is indicated as well as the cutter centrum CX of the robotic lawnmower 100. As the robotic lawnmower 100 approaches the corner, as shown in figure 5D, the robotic lawnmower 100 navigates so that the cutter 160 - and preferably the cutter centrum CX - overlaps the intended pattern, and the robotic lawnmower 100 moves forwards in this manner following the intended pattern. As the mower reaches the corner, or rather the cutter 160 - and preferably the cutter centrum CX - reaches the corner, as shown in figure 5D, the robotic lawnmower 100 starts turning all while keeping the cutter - and preferably the cutter centrum CX - over the intended pattern. In order to enable this, the turning includes a reversal as indicated in figure 5G where the path of the rotational centrum (white line) indicates that the robotic lawnmower 100 is reversing while turning to enable the turn while maintaining the cutter over the intended pattern. The turning while reversing is continued while the cutter centrum CX is behind the rotational centrum as regards the direction of the intended pattern. As the cutter centrum CX is again in front of or parallel to the rotational centrum RX as regards the direction of the intended pattern, as is shown in figure 5H, the robotic lawnmower 100 starts moving forwards again as is shown in figure 5I and navigates on to and over the intended pattern all while maintaining the cutter centrum CX over the intended pattern as shown in figure 5J and figure 5K.

The robotic lawnmower 100 is thus configured to move forwards until the cutter centrum is over the corner, and then start reversing and turning so that the robotic lawnmower 100 can turn while keeping the cutter - and preferably the cutter centrum CX - over the intended pattern. As the cutter centrum CX is in front of (or on the side of) the rotational centrum RX as regards the direction of the intended pattern, the robotic lawnmower 100 starts moving forwards again bringing the robotic lawnmower 100 in line with the intended pattern all while maintaining the cutter - and preferably the cutter centrum CX - over the intended pattern.

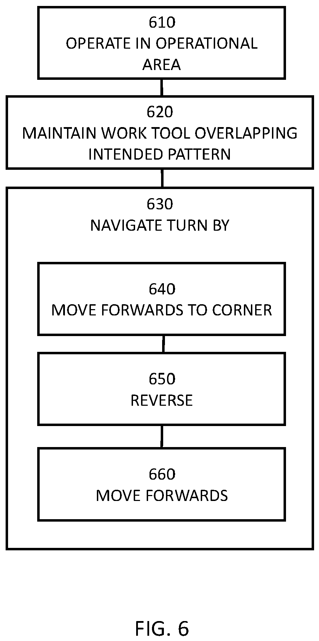

Figure 6 shows a flowchart for a general method according to herein. The method is for use in a robotic lawnmower as in figure 1 in a manner as discussed above in relation to figures 4A, 4B and 4C and figures 5A, 5B and 5C. The method comprises the robotic lawnmower 100 operating 610 in the operational area 205 according to an intended pattern while maintaining 620 the grass cutter (160) overlapping the intended pattern, and to navigate 630 a turn in the intended pattern by moving forwards 640 to a corner in the turn, moving rearwards 650 and turning to move the grass cutter out of the corner along the intended pattern and then again moving forwards 660, all while maintaining the grass cutter 160 overlapping the intended pattern.

## Claims

1. A robotic lawnmower system (200) comprising a robotic lawnmower (100) arranged to operate in an operational area (205) according to an intended pattern, the robotic lawnmower (100) comprising a grass cutter (160) having a centrum (CX) that deviates from a rotational centrum (RX) of the robotic lawnmower (100), and a controller (110), wherein the controller (110) is configured to
cause the robotic lawnmower (100) to navigate according to the intended pattern maintaining the grass cutter (160) overlapping the intended pattern, and to navigate a turn in the intended pattern by:
moving forwards to a corner in the turn,
moving rearwards and then again moving forwards, all while maintaining the grass cutter (160) overlapping the intended pattern.

2. The robotic lawnmower system (200) according to claim 1, wherein the controller (110) is further configured to prioritize maintaining the centrum (CX) of the grass cutter (160) over the intended pattern.

3. The robotic lawnmower system (200) according to claim 1 or 2, wherein the controller (110) is further configured to maintain the grass cutter (160) inside the turn.

4. The robotic lawnmower system (200) according to claim 1, 2 or 3, wherein the corner has an angle above 60 degrees.

5. The robotic lawnmower system (200) according to any preceding claim, wherein the controller (110) is further configured to cause the robotic lawnmower (100) to navigate the turn having the corner in the intended pattern by:
moving forwards until the grass cutter (160) is over the corner, and then
reversing and turning so that the robotic lawnmower (100) is enabled to turn while keeping the grass cutter (160) over the intended pattern, and
determine that the grass cutter centrum (CX) is in front of the rotational centrum (RX) as regards the direction of the intended pattern, and then
moving forwards again bringing the robotic lawnmower (100) in line with the intended pattern all while maintaining the grass cutter (160) over the intended pattern.

6. The robotic lawnmower system (200) according to claim 5, wherein the controller (110) is further configured to maintain the grass cutter (160) over the intended pattern by maintaining the grass cutter centrum (CX) over the intended pattern.

7. The robotic lawnmower system (200) according to any of claims 1 to 4, wherein the controller (110) is further configured to cause the robotic lawnmower (100) to navigate a turn having a first corner in the intended pattern by:
causing the robotic lawnmower (100) to move forwards and to deviate from the first corner to a second position after the first corner where again the grass cutter (160) overlaps the intended pattern, and thereafter
causing the robotic lawnmower (100) to move in reverse to a third position over the first corner where again the grass cutter (160) overlaps the intended pattern on the first corner and then again moving forwards.

8. The robotic lawnmower system (200) according to claim 7, wherein the controller (110) is further configured to cause the robotic lawnmower (100) to navigate a turn having a second corner in the intended pattern whereby the second position overlaps the second corner and whereby the controller is further configured to cause the robotic lawnmower (100) to again move forwards from the first corner and to deviate from the second corner to a fourth position after the first corner where again the grass cutter (160) overlaps the intended pattern.

9. A method for use in a robotic lawnmower system (200) comprising a robotic lawnmower (100) arranged to operate in an operational area (205) according to an intended pattern, the robotic lawnmower (100) comprising a grass cutter (160) having a centrum (CX) that deviates from a rotational centrum (RX) of the robotic lawnmower (100), and a controller (110), wherein the method comprises
causing the robotic lawnmower (100) to navigate according to the intended pattern maintaining the grass cutter (160) overlapping the intended pattern, and to navigate a turn in the intended pattern by:
moving forwards to a corner in the turn,
moving rearwards and then again moving forwards, all while maintaining the grass cutter (160) overlapping the intended pattern.
